# EUROPEAN PATENT APPLICATION

(11) **EP 0 598 685 A1**
(43) Date of publication of application: **25.05.1994**
(21) Application number: 93830450.8
(22) Date of filing: 09.11.1993
(51) Int. Cl.: B60R 19/00

(54) **A vehicle with a safety device for frontal collision**

(30) Priority: 17.11.1992 IT TO920927
(71) Applicant: I.DE.A. S.p.A. INSTITUTE OF DEVELOPMENT IN AUTOMOTIVE ENGINEERING, I-10024 Moncalieri (Torino) (IT)
(72) Inventor: Fantini Muzzarelli, Marco, I-10131 Torino (IT)
(74) Representative: Buzzi, Franco

(57) **Abstract**

A vehicle having first body section (C1) placed in the front, which supports a power unit (M) and is collapsible in case of a frontal collision of the vehicle of a certain amount, and a second body section (C2) placed immediately behind the first section (C1) and delimiting a passenger compartment (A). The power unit (M) is operatively connected to a safety device (1) including a flexible cable system (2) linked to energy-absorbing members (4) incorporated within the structure of the second body section (C2), so as to safeguard the occupants of the vehicle passenger compartment (A) in case of frontal collision and consequent backward displacement of the power unit (M).

## Description

The present invention is generally related to vehicles having a body comprising a first section placed in the front, which delimits a space wherein a power unit is supported and which is collapsible in the case of frontal collision of the vehicle, a second section placed immediately behind the said first section and delimiting a passenger compartment, said second section having a structure provided with a resistance to collapsing substantially greater than the first section, and a safety device including a flexible and substantially unstretchable cable system operatively connected to the power unit and subject to traction owing to rearward displacement thereof following a frontal collision of a certain amount, so as to operate intervention of said safety device.

Vehicles provided of such safety devices for protecting the driver in case of frontal collision have been proposed, as an alternative to airbag systems, for instance in international patent application WO 85/01709. This document discloses performing, in case of vehicle frontal collision of a certain amount, withdrawal the steering wheel forwardly as a consequence of rearward shifting of the power unit, by means of the flexible cable.

Similar systems have also been proposed wherein, additionally or alternatively to forward motion of the steering wheel, the rearward displacement of the engine caused by a frontal collision performs, through the said flexible cable or by means of auxiliary hydraulic systems, tensioning of the vehicle seat belts, by acting on the anchoring points thereof to the body.

These known systems are substantially devoted to increasing safety for the vehicle driver, limiting as far as possible impact thereof against the steering wheel following collision, without any practical effectiveness for the passengers.

Moreover, the usefulness of these known devices is limited to the case of low-speed frontal collisions or anyway such as to substantially involve only collapsing of the front section of the body. Actually, the only expedient nowadays known for reducing the effects of a frontal collision in connection with the body section delimiting the passenger compartment consists of manufacturing the structure of the body front section with high collapsing performances, to the aim of conferring to such a section the maximum capability of absorbing the impact energy. In case of violent crushes this capability is insufficient, which fatally involves structural collapsing of the section delimiting the passenger compartment, with evident consequences deriving thereby for the passengers.

The object of the present invention is to overcome the above-mentioned drawbacks, and to provide a vehicle of the aforecited type which is adapted to ensure a higher safety degree, in connection both with the driver and the passengers, in the case of frontal collision of the vehicle.

A further object of the invention is to provide a vehicle of the aforesaid type, provided with a safety device which is able to take advantage, in a simple and functional way, of the backward displacement of the power unit in case of a frontal collision, so as to absorbe the impact energy thus limiting, or at least delaying, collapsing of the body section delimiting the passenger compartment.

Still a further object of the invention is to provide a safety system adapted to be manufactured in a relatively simple and economical way, and also adapted to be applied on already existing vehicles.

According to the invention, the above objects are achieved by virtue of a vehicle such as defined at the beginning, essentially characterized in that the safety device comprised of a flexible cable system operatively connected to the power unit, includes energy-absorbing members incorporated within the structure of the said second body section.

These energy-absorbing members conveniently act along at least one action line which is substantially parallel to the longitudinal axis of the vehicle, and the flexible cable is substantially lying on a plane, preferably horizontal, containing such action line.

According to a preferred construction of the invention, the energy-absorbing members are subdivided in two groups arranged on the opposed sides of the passenger compartment of the vehicle. The energy-absorbing members of each group are arranged in series and are aligned along a respective common line of action, and the flexible cable has two branches each of which is placed along the line of action of a respective one of said groups and is operatively connected to each of the energy-absorbing members of such group.

Each energy-absorbing member is conveniently constituted by a cylindrical tubular body having a collapsible axial wall. In this case the flexible cable extends co-axially through each cylindrical tubular body and on one side freely crosses the front end thereof, while on the other side is rigidly anchored to the respective rear end.

Normally, in the cars which are presently manufactured the body section delimiting the passenger compartment of the vehicle includes two lower lateral stiffening girders. In this case the cylindrical tubular bodies of the two groups are fitted within apertures formed in two respective reaction plates rigidly fixed to the two stiffening girders and placed on the common horizontal plane of the safety device.

Further features and advantages of the invention will become apparent in the following detailed description, with reference to the accompanying drawings purely provided by way of non-limiting example, in which:
- figure 1 is a diagrammatic perspective view of a portion of a vehicle provided with a safety device for frontal collision according to the invention,
- figure 2 is a top plan view of figure 1,
- figure 3 is an enlarged longitudinal section view along III-III of figure 2,
- figure 4 is an enlarged cross sectional view along line IV-IV of figure 2,
- figure 5 is a sectional view along line V-V of figure 3 and
- figure 6 is an enlarged sectional view along line VI-VI of figure 3.

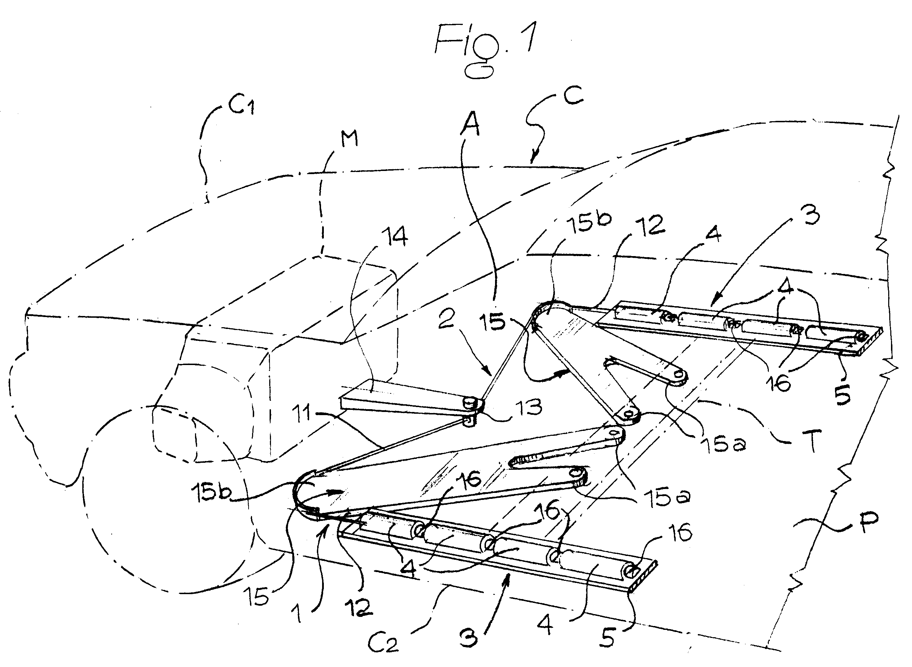

Referring initially to figures 1 and 2, reference C generally designates the body of a motor vehicle having a first section C₁ placed in the front, and a second section C₂ placed immediately behind the first section C₁.
The front section C₁ delimits a space within which a power unit M, which in the shown example is arranged transverse to the longitudinal axis of the vehicle, is supported in a usual way, normally by means of three securing points with elastic damping supports.
The second section C₂ delimits a passenger compartment A having a driving site including a driver's seat and a steering wheel (not shown in the drawings), at least a further front seat and possibly rear seats (not shown) for the passengers.
The section C₁ has conventionally a frame-like structure provided with a limited resistance to collapsing, in the case of frontal collision, along the longitudinal direction of the car.
The second body section C₂ is instead provided with a higher resistance to longitudinal collapsing, and in this respect it is constituted in a usual way by a platform P delimited along the sides thereof by a pair of lower lateral stiffening box-like longitudinal members, or girders, L (figure 4). These girders L are normally connected to each other by one or more transverse elements T, onto which the attachment members for the vehicle seats are secured.
According to the invention, the vehicle is provided with a safety device, generally designated as 1, whose function is to limit the effects of a frontal collision for the occupants of the passenger compartment A. In general terms, the safety device 1 takes advantage of the rearward displacement of the power unit M, generated by the frontal impact and by the consequent collapsing of the front body section C₁, so as to actuate intervention of an energy-absorbing system incorporated within the structure of the second body section C₂, through a flexible cable transmission 2 operatively linked to the power unit M.
In the case of the shown example, this energy-absorbing system 1 comprises two groups 3 of energy-absorbing members 4 arranged on the sides of the passenger compartment and, more particularly, placed in correspondence of the two lower lateral girders L of the body section C₂,at the level of the platform P.
Each group 3 is comprised of a sturdy reaction plate 5, placed horizontally and parallel to the respective lateral girder L, which is rigidly fixed, for instance by means of bolts 6 (figure 4), to the structure of the platform P.
The plate 5 is formed with a number of openings 7, spaced apart from and longitudinally aligned to one another, each of which houses a respective energy-absorbing member 4, constituted by a cylindrical tubular body, normally made of metal, arranged with its axis oriented parallel to the longitudinal direction of the reaction plate 5 and having an axially collapsible lateral wall 8.
Two opposed conical annular head elements 9, 10 are respectively arranged at the front end and at the rear end of the lateral wall 8, which may be constituted by distinct elements or may be integrally formed with the cylindrical body 4, and which bear against the front edge 7a and against the rear edge 7b, respectively, of the opening 7.
Following this arrangement, the energy-absorbing members 4 of each group 3 are arranged in a co-axial series configuration, with the respective axis placed substantially on the plane of the platform P.
The flexible cable transmission 2 is constituted, in the shown example, by a single substantially unstretchable metal wire having two lateral branches 12, each of which is arranged along the common axis of the energy-absorbing cylinders 4 of a respective group 3, and is operatively connected, as will be explained hereinbelow, to each of the said energy-absorbing cylinders 4.
The two lateral branches 12 are joined to each other by an intermediate cable section 11 which is also placed substantially on the plane of the platform P and is linked at 13 to the power unit M.
In the case of the shown example, such linkage is performed by means of an arm 14 projecting rearwardly from the power unit M, parallel to the longitudinal direction of the vehicle, and to the rear end of which the intermediate cable section 11 is anchored by any suitable way in a rigid or slidable way. The arm 14 may possibly carry one of the connecting supports of the power unit M to the structure of the front body section C₁ which, in case of a frontal collision, will be subject to breakage owing to backward displacement of said power unit M.
For the guidance of the connecting portions between the intermediate section 11 and the two lateral branches 12 of the cable 2, two arms 15 are provided for, which are arranged horizontally and substantially on the plane of the platform P, and are for instance generally V-shaped and rigidly secured at their respective rear ends 15a onto the transverse elements T of the second body section C₂. The front ends 15b of the guide arms 15 are rounded, so as to provide bending of the cable 2. As an alternative, the ends 15b may be equipped with respective pulleys.

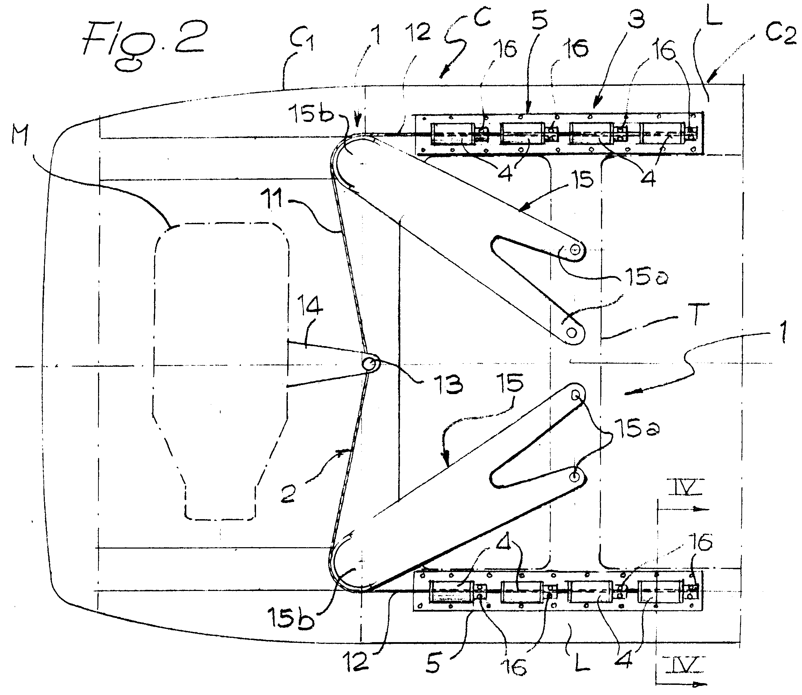

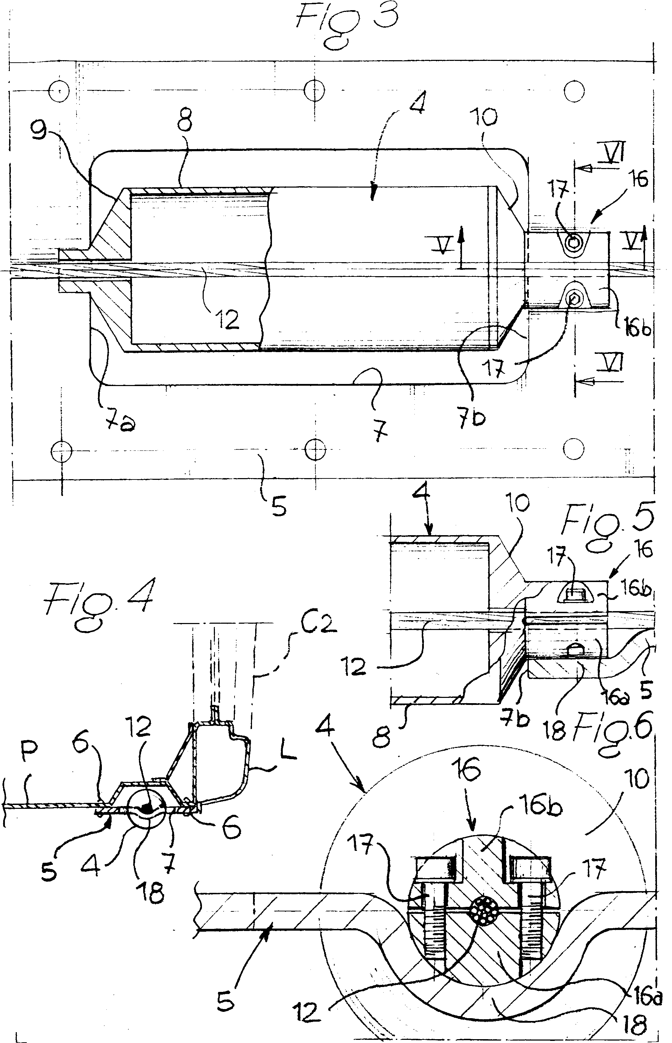

The configuration of the connecting arm 14 and of the two guide arms 15 is such that the cable 2 is maintained in a pre-stressed condition and is placed substantially on the plane of the platform P.
Referring now in better detail to figures 3 and 5, 6, each lateral branch 12 is co-axially extending, as previously explained, through the energy-absorbing cylinders 4 of the respective group 3, freely and slidably crossing the respective annular front headers 9, while being rigidly anchored to the respective annular rear headers 10.
This anchoring is performed, for each energy-absorbing member 4, by means of a connecting clamp 16 constituted by a portion 16a fixed to or integrally formed with the rear header 10 and by a portion 16b, which are coupled and clamped therebetween by means of screws 17 so as to clamp the corresponding area of the lateral branch 12 of the cable 2.
The portions of the lateral branches 12 extending between adjacent energy-absorbing members 4 are substantially located on the plane of the two plates 5, i.e. of the platform P: in this respect, each plate 5 is formed in the areas comprised between the respective openings 7 with depressed zones 18, housing also the corresponding portions 16a of the clamps 16.

Operation of the safety device according to the invention is as follows.

In the case of a frontal impact of the vehicle, the structure of the front body section C₁ is subject to collapsing, and the power unit M is displaced rearwardly towards the body section C₂, owing either to the said collapsing or directly to the impact force.
As a consequence of this rearward displacement, the arm 14 causes tractioning of the cable 2, whose lateral branches 12 are pulled forwardly along with the respective clamps 16.
This generates, due to the rear thrust applied by the headers 10 and to the front reaction of the headers 9 against the corresponding front edges 7a of the openings 7 of the plates 5, collapsing in the axial direction of the lateral walls of the cylindrical bodies 4. As a consequence, the two groups perform a substantial absorbing action of the impact energy, which prevents, or at least appreciably limits, collapsing of the body section C₂ structure, thus contributing to ensure safety for the occupants of the vehicle passenger compartment A.

Analysis and tests carried out by the applicant provided the following results, on the basis of simulation of an angled front crash of a compact car of current production not provided with the device according to the invention, and of an identical car equipped with such a device, provided with three energy-absorbing cylinders 4 for each group 3, having a diameter of 60 mm. and a thickness in a first case of 1 mm. and in a second case of 1,5 mm., under an impact speed of 56 km/h.
In the first case (car without safety device) a collapsing stroke of the body front section C₁ was measured of approximately 300 millimeters under an average impact force of 6000 Kg, i.e. with a corresponding impact energy of 1800 Kgm. As far as the second body section C₂ is concerned, a collapsing stroke of 200 millimeters was measured, under an average force of 12000 Kg and an absorbed energy of 2400 Kgm.
The resulting total collapsing travel was thus of 500 millimeters, with an absorbed energy of 4200 Kgm.
In the second case, with an identical car equipped with the device according to the invention, under the same collapsing stroke (300 mm.) of the body front section C₁, an absorbed energy of 3100 Kgm resulted (of which 1800 Kgm deriving from collapsing of the body section C₁ and 1300 Kgm deriving from collapsing of the six energy-absorbing cylinders 4), and the collapsing stroke of the body section C₂ was reduced to 92 millimiters with an energy absorption of 1300 Kgm. A total collapsing travel of the vehicle structure thus derived of 392 millimeters, under the same total absorbed energy.
In the third case the energy absorption performed by the six energy-absorbing cylinders 4 having a greater thickness has been evaluated in 3300 Kgm, with a resulting total collapsing stroke of the two body sections C₁, C₂ of less than 300 millimeters.

Naturally the details of construction and the embodiment may be widely varied with respect to what has been disclosed and illustrated, without thereby departing from the scope of the present invention. Thus, for instance, both the number, the disposition and the configuration of the energy-absorbing cylinders 4, and the disposition and configuration of the cable 2 and related pre-tensioning and transmission system may be different from what has been illustrated.

## Claims

1. A vehicle having a body (C) comprising a first section (C₁) placed in the front and delimiting a space wherein a power unit (M) is supported, said first section (C₁) being collapsible in case of frontal collision of the vehicle, a second section (C₂) placed immediately behind the said first section (C₁) and delimiting a passenger compartment (A), said second section (C₂) having a structure provided with a collapsing resistance substantially higher than the first section (C₁), and a safety device (1) including a substantially unstretchable flexible cable system (2) operatively connected to the power unit (M) and subject to traction owing to rearward displacement thereof, following a frontal collision of a certain amount of the vehicle, so as to operate intervention of the said safety device (1), characterized in that the safety device (1) comprises energy-absorbing members (4) incorporated within the structure of the said second body section (C₂).

2. Vehicle according to claim 1, characterized in that the said energy-absorbing members (4) act along at least one action line which is substantially parallel to the longitudinal axis of the vehicle, and in that the said flexible cable (2) is substantially placed on a plane (P) containing said action line.

3. Vehicle according to claim 2, characterized in that said plane (P) is horizontal.

4. Vehicle according to claim 2 or claim 3, characterized in that the said energy-absorbing members (4) are subdivided in two groups (3) placed on the opposite side of the passenger compartment (A), the energy-absorbing members (4) of each group (3) being arranged in series and aligned with one another along a respective common action line, and in that the flexible cable (4) has two branches (12) each of which is placed along the action line of a respective one of said groups (3) and is operatively connected to each energy-absorbing member (4) of said group (3).

5. Vehicle according to claim 4, characterized in that the two branches (12) of the flexible cable (2) are connected to an intermediate cable section (11) linked to the vehicle power unit (M).

6. Vehicle according to claim 5, characterized in that it further comprises pre-tensioning means (14, 15) of the flexible cable (2) and guide means (15) of the said branches (12) of the flexible cable (2), rigidly anchored onto the structure of said second body section (C₂) and substantially arranged on said horizontal plane (P).

7. Vehicle according to any of the preceeding claims, characterized in that each energy-absorbing member is constituted by a cylindrical tubular body (4) having an axially collapsible lateral wall (8).

8. Vehicle according to claim 7, characterized in that the flexible cable (2) co-axially extends through each cylindrical tubular body (4) and on one side it freely crosses the front end thereof (9), while on the other side it is rigidly anchored to the corresponding rear end (10) thereof.

9. Vehicle according to claim 8, characterized in that an annular header (10), having a conical surface and provided with a clamp (16) for securing the flexible cable (2) is arranged at the rear end of each cylindrical tubular body (4).

10. Vehicle according to any of claims 7 through 9, characterized in that each cylindrical tubular body (4) is supported within a respective aperture (7) formed in a reaction structure (5) incorporated within said second body section (C₂), and reacts forwardly against the front edge (7a) of said aperture (7).

11. Vehicle according to claim 10, characterized in that an annular conical header (9) is arranged at the front end of cylindrical tubular body (4), abutting against said front edge (7a) of the aperture (7) of the reaction structure (5).

12. Vehicle according to claims 3 and 10, wherein said second body section (C₂) comprises two lateral lower stiffening girders (L), characterized in that said reaction structure comprises two plates (5) rigidly fixed to said girders (L), placed on the said horizontal plane (P) and each formed with a series of apertures (7) housing said cylindral tubular bodies (4).

13. Vehicle according to claim 12, characterized in that each plate is shaped, in alignment with the longitudinal center line of said apertures (7), so as to allow passing of the flexible cable (2) substantially along the axis of said cylindrical tubular bodies (4).

14. Safety device for equipping a vehicle having a body (C) comprising a first section (C₁) placed in the front and delimiting a space wherein a power unit (M) is supported, said first section (C₁) being collapsible in case of frontal collision of the vehicle, a second section (C₂) placed immediately behind said first section (C₁) and delimiting a passenger compartment (A), said second section (C₂) having a structure provided with a collapsing resistance which is substantially higher than the first section (C₁), said safety device including a substantially unstretchable flexible cable system (2) intended to be operatively connected to the power unit (M) and to be subject to traction owing to rearward displacement thereof, following a frontal collision of the vehicle of a certain amount, said safety device (1) being characterized in that it comprises energy-absorbing members (4) adapted to be incorporated within the structure of said second body section (C₂) and the intervention of which is operable by said flexible cable system.
